# EUROPÄISCHE PATENTSCHRIFT

(11) **EP 2 100 493 B1**
(45) Veröffentlichungstag und Bekanntmachung des Hinweises auf die Patenterteilung: **18.02.2015**
(21) Anmeldenummer: 08004536.2
(22) Anmeldetag: 12.03.2008
(51) Int. Cl.: A01C 23/00, A01B 73/06

(54) **Gülleverteiler-Fahrzeug**
Vehicle for distributing liquid manure
Véhicule pour la distribution de lisier

(43) Veröffentlichungstag der Anmeldung: 16.09.2009
(73) Patentinhaber: Zunhammer, Sebastian, 83301 Traunreut (DE)
(72) Erfinder: Zunhammer, Sebastian, 83301 Traunreut (DE)

(56) Entgegenhaltungen:
- DE-A1- 10 041 148
- DE-A1- 10 235 115
- DE-U1- 20 217 464
- DE-U1-202007 002 834

## Beschreibung

Die vorliegende Erfindung bezieht sich auf ein Güllefahrzeug mit einem Fahrzeugrahmen, einem Fahrgestell, einem Güllevorratsbehälter und einem Gülleverteiler gemäß dem Oberbegriff des Anspruchs 1.

Gülle hat als natürlicher Dünger einen hohen Wert und kann insbesondere bei richtiger Anwendung zu einer erheblichen Reduktion des Einsatzes mineralischer Dünger beitragen. Hinzu kommt, dass aufgrund der wesentlich erhöhten Tierbestände außerordentlich viel Gülle anfällt und in irgendeiner Form verarbeitet werden muss. Wenn Gülle als Dünger in den Boden eingebracht wird, so ist darauf zu achten, dass dies mit einem Minimum an Umweltbelastung geschieht, d. h. dass ein Verdunsten von Stickstoff (Ammoniak) möglichst weitgehend vermieden wird.

Es ist üblich geworden, Getreidefelder für die Saat, die Pflege, den Pflanzenschutz und die Düngung so anzulegen, dass der Traktor mit den erforderlichen Geräten durch eine immer wieder zu benutzende Fahrspur fährt, in der nichts wächst. Aus diesem Grunde gibt es bestimmte Arbeitsbreiten von 12, 15, 18 Metern, oder einem ähnlichem Raster, auf welche die einzelnen Arbeitsgeräte und auch die Ausbringvorrichtungen für Gülle abgestimmt sind. Bei bestehenden Kulturen, beispielsweise Raps, Getreide oder dergleichen, erfolgt während des Wachstums mehrmals eine Kopfdüngung mittels relativ kleiner Güllegaben von beispielsweise etwa 12 bis 15 cbm/ha. Bei einer Arbeitsbreite in dem vorstehend angegebenen Bereich und Einsatz eines Gülle-Tankwagens mit einem Gülle-Behälter von 7000 Liter Inhalt bedeutet dies, dass der Behälter nach 260 bis 480 m Fahrstrecke leer ist. Da die Felder sehr oft erheblich länger sind, bedeutet dies, dass der Gülle-Behälter und der ihn ziehende Traktor mindestens ein zweites Mal durch das Feld fahren müssen und zwar insbesondere durch die bereits mit Gülle beaufschlagte Fahrspur. Dies führt nicht nur zu einer Mehrbelastung für den Fahrer, sondern auch zu einer Beschädigung des Feldes, weil durch die auf den Boden aufgebrachte Gülle diese selber, der Boden und die Pflanzen an den Rädern des Fahrwerkes kleben bleiben und von diesen aufgewickelt werden.

Damit eine Ausbringvorrichtung auch mehrfach unter GülleAusbringung durch die selbe Fahrspur fahren kann, ohne dass die Gefahr einer Boden- und Pflanzen-Beschädigung gegeben ist, ist eine Ausbringung der Gülle in Streifen möglich, und zwar in zwei oder sogar drei Fahrbewegungen, die jeweils über die volle Länge des mit Gülle zu beaufschlagenden Feldes, d. h. über die volle so genannte Schlaglänge gehen. Die Summe der Breite der bei jeder Fahrbewegung mit Gülle zu beaufschlagenden Streifen ist jeweils gleich. Beispielsweise kann bei sehr langen Feldern in drei Arbeitsdurchgängen gearbeitet werden, wobei zuerst zwei äußere Streifen von jeweils 1/6 Breite der Gesamtarbeitsbreite mit Gülle beaufschlagt werden. Anschließend werden zwei weitere seitliche Streifen von insgesamt gleicher Breite mit Gülle beaufschlagt. Als letztes wird ein mittlerer Streifen mit Gülle beaufschlagt, der ebenfalls 1/3 der Gesamtbreite hat. Wenn bei einem kürzeren Feld die Gesamtlänge des Feldes des in zwei Verfahrbewegungen, also in zwei Arbeitsdurchgängen, mit Gülle beaufschlagt werden kann, dann werden bei der ersten Verfahrbewegung zwei seitliche Streifen von je 1/4 der Gesamtarbeitsbreite und bei der zweiten Fahrbewegung ein mittlerer Streifen von der halben Arbeitsbreite mit Gülle beaufschlagt.

Neben den vorstehend beschriebenen Betriebsarten, bei denen Gülle innerhalb eines oder mehrerer Teilbreitenstreifen ausbringbar ist, kann natürlich auch eine Betriebsart vorgesehen sein, bei der Gülle über die gesamte Arbeitsbreite der Ausbringvorrichtung abgegeben wird. Auch kann beispielsweise in verschiedenen Betriebsarten vorgesehen sein, Gülle nur in randseitigen Teilbereichen auszubringen, oder bei der Düngung von Feldern übrig bleibende unbedüngte Randstreifen gezielt mit Gülle beaufschlagen zu können.

Um derartige Betriebsarten zu ermöglichen, ist in der DE 41 30 817 C2 vorgeschlagen, mittels elektronisch gesteuerten Steuerventilen die Arbeitsbreite bei der Ausbringung von Gülle einstellbar zu gestalten.

Aus der DE 20 2007 002 834 U1 ist ein Gülleanhänger bekannt, bei dem sich die Verteilereinrichtung für die Straßenfahrt parallel zur Längsachse des Anhängers in Transportstellung befindet und in die Funktionsstellung quer zur Längsachse verschwenkt werden kann. In dieser Funktionsstellung ist Arbeitsbreite ebenfalls - wie bei der bereits erwähnten DE 41 30 817 C2 - durch ansteuerbare Ausbringorgane veränderbar. Die Fahrsicherheit soll dadurch verbessert werden, dass die Halterungen für die Arme der Verteilereinrichtung im Wesentlichen vor dem Tank im Bereich der Zugdeichsel des Güllefahrzeugs angeordnet sind. Von diesem Stand der Technik geht die vorliegende Erfindung gemäß dem Oberbegriffs ihres unabhängigen Anspruchs 1 aus.

Der Erfindung liegt demgegenüber die Aufgabe zu Grunde, ein Güllefahrzeug zu schaffen, dessen Arbeitsbreite gegenüber den bekannten Güllefahrzeugen weiter variiert und vergrößert werden kann, wobei die mechanische Stabilität und die Fahrsicherheit des Güllefahrzeugs erhalten bleiben soll.

Diese Aufgabe wird durch ein Güllefahrzeug mit den Merkmalen des Anspruchs 1 gelöst. Vorteilhafte Ausgestaltungen des erfindungsgemäßen Güllefahrzeugs sind den abhängigen Ansprüchen zu entnehmen.

Die Vorteile des erfindungsgemäßen Güllefahrzeugs liegen in der besseren Nutzbarkeit des Güllefahrzeugs, in der guten Gewichtsverteilung, sowohl im Straßenverkehr als auch bei der Ausbringung der Gülle sowie in der höheren Stabilität, vor allem durch die direkt am Hauptrahmen angeordneten Ausleger-Abschnitte und deren Abstützung in Widerlagern am Heck des Güllefahrzeugs.

Besonders vorteilhaft ist ein Güllefahrzeug mit einem Fahrzeugrahmen, einem Fahrgestell, einem Güllevorratsbehälter und einem Gülleverteiler, welcher aus einem Hauptrahmen und mehreren horizontal schwenkbaren Auslegern besteht, welche zumindest um vertikale Achsen schwenkbar sind und Gülle-Ausbringorgane tragen, die vom Güllevorratsbehälter mittels Leitungen mit Gülle versorgbar sind, wobei der Hauptrahmen des Gülleverteilers an einer in Fahrtrichtung des Güllefahrzeugs vorne liegenden Stirnseite des Güllefahrzeugs angeordnet ist, und die schwenkbaren Ausleger beiderseits der Mittellängsachse des Güllefahrzeugs angeordnet sind, und bei dem die schwenkbaren Ausleger mehrere Ausleger-Abschnitte umfassen, die mit dem Hauptrahmen und untereinander über Gelenke verbunden sind, wobei die direkt am Hauptrahmen angelenkten Ausleger-Abschnitte frei von Gülle-Ausbringorganen sind, einen beliebigen Winkel zwischen 0° und 90° zur Mittellängsachse des Güllefahrzeugs einnehmen können und in ihrer 0°-Position von Widerlagern am Heck des Güllefahrzeugs abgestützt sind, und dass die dem Hauptrahmen fern liegenden Ausleger-Abschnitte Gülle-Ausbringorgane tragen, wobei sich in der 0°-Position der Ausleger-Abschnitte die maximal wirksame Arbeitsbreite auf die Summe der jeweiligen Breite der Gülle-Ausbringorgane erstreckt, beginnend an der Mittellängsachse des Güllefahrzeugs.

Ein Güllefahrzeug ist auch dann besonders vorteilhaft ausgestaltet, wenn durch Verschwenken der direkt am Hauptrahmen angelenkten Ausleger-Abschnitte in einem beliebigen Winkel zwischen 0° und 90° zur Mittellängsachse des Güllefahrzeugs die Arbeitsbreite des Gülleverteilers einstellbar ist.

Ein Güllefahrzeug ist auch dann besonders vorteilhaft ausgestaltet, wenn darüber hinaus die Arbeitsbreite des Gülleverteilers durch Teilabschaltung der Schleppschlauch-Verteiler einstellbar ist.

Des Weiteren ist ein Güllefahrzeug vorteilhaft ausgebildet, wenn die dem Hauptrahmen fern liegenden Ausleger-Abschnitte mit ihren Gülle-Ausbringorganen um vertikale Achsen schwenkbar und um horizontale Achsen drehbar sind und wenn die Gülle-Ausbringorgane als Kippverteiler mit Schleppschläuchen ausgebildet sind.

Ein Güllefahrzeug ist auch dann besonders vorteilhaft ausgestaltet, wenn die am Hauptrahmen mittels Gelenken angelenkten Ausleger-Abschnitte um vertikale Achsen schwenkbar sind und zur Mittellängsachse des Güllefahrzeugs einen Winkel zwischen 0° und 90° einnehmen können.

Besonders günstig ist ein Güllefahrzeug ausgestaltet, wenn die am Hauptrahmen mittels Gelenken angelenkten Ausleger-Abschnitte in ihrer 0°-Position von Widerlagern am Heck des Güllefahrzeugs abgestützt sind.

Vorteilhaft ist ein Güllefahrzeug auch dann, wenn die Arbeitsbreite des Gülleverteilers einstellbar ist, beispielsweise, wenn die Arbeitsbreite des Gülleverteilers durch Verschwenken der Ausleger-Abschnitte einstellbar ist, oder wenn die Arbeitsbreite des Gülleverteilers durch Teilabschaltung der Schleppschlauch-Verteiler einstellbar ist.

Wenn die Arbeitsbreite des Gülleverteilers durch Verschwenken der Ausleger-Abschnitte und Teilabschaltung der Schleppschlauch-Verteiler einstellbar ist, entsteht ein besonders vorteilhaftes Güllefahrzeug.

Weitere Vorteile:
1) Durch die Frontmontage ist die Gewichtsverteilung besser, da der Hauptrahmen vorne am Fahrzeug befestigt ist, anstatt hinten. Das Gewicht des gesamten Ausleger-Gestänges ist besser auf die Fahrzeuglänge verteilt.
2) Durch die Klappung des Ausleger-Gestänges nach vorne wird die Stützlast auf die Zugmaschine bei "Breitausbringung" erhöht, mehr als beispielsweise auf der Strasse zulässig. Das ergibt bessere Traktion auf dem Acker. Bei eingeklapptem Ausleger-Gestänge kann hingegen die zum Straßenverkehr zulässige Stützlast eingehalten werden.
3) Bei "Schmalausbringung" ist das Ausleger-Gestänge wesentlich stabiler, weil der Hauptausleger am Tankwagen arretiert wird. Somit werden die Gelenke und das Ausleger-Gestänge wesentlich weniger beansprucht als beim Stand der Technik. Die "Breitausbringung" ist nur in stehenden Bestand (z.B. wachsendes Getreide) notwendig, also eine kurze Zeit im Frühjahr. Das übrige Jahr z.B. auf Acker oder Wiese wird in der Betriebsart "Schmalausbringung" gefahren und das Ausleger-Gestänge geschont.
4) Durch die Frontmontage besteht eine bessere Übersicht auf das Ausleger-Gestänge, insbesondere bei "Breitausbringung". In dieser Betriebsart ist dies besonders wichtig wegen möglicher Hindernisse wie Bäume, Felsbrocken etc.
5) Die Druckleitung ist bei "Schmalausbringung" etwa so lang wie bei bisherigen schmalen Verteilern. Bei "Breitausbringung" wird die Leitung nicht länger, das begrenzt den Druckverlust und spart Gewicht.

Anhand von Beispielen wird die Erfindung nachstehend mit Hilfe der Zeichnungen noch näher erläutert.

Es zeigt:
Figur 1 ein erfindungsgemäßes Güllefahrzeug in Draufsicht während der Betriebsart: Transportstellung;
Figur 2 ein erfindungsgemäßes Güllefahrzeug in Draufsicht während der Betriebsart: Schmalausbringung;
Figur 3 ein erfindungsgemäßes Güllefahrzeug in Draufsicht während der Betriebsart: Breitausbringung;
Figur 4 ein erfindungsgemäßes Güllefahrzeug in Frontansicht während der Betriebsart: Breitausbringung und
Figur 5 ein erfindungsgemäßes Güllefahrzeug in Draufsicht während der Betriebsart: Teil-Breitenausbringung.

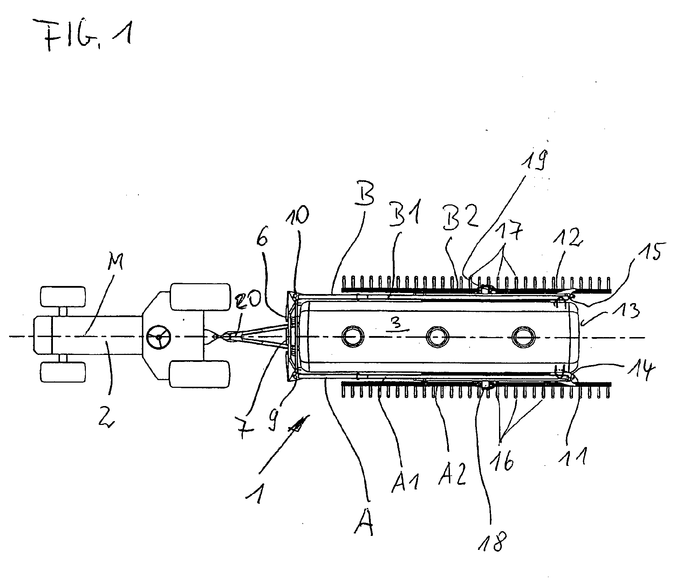

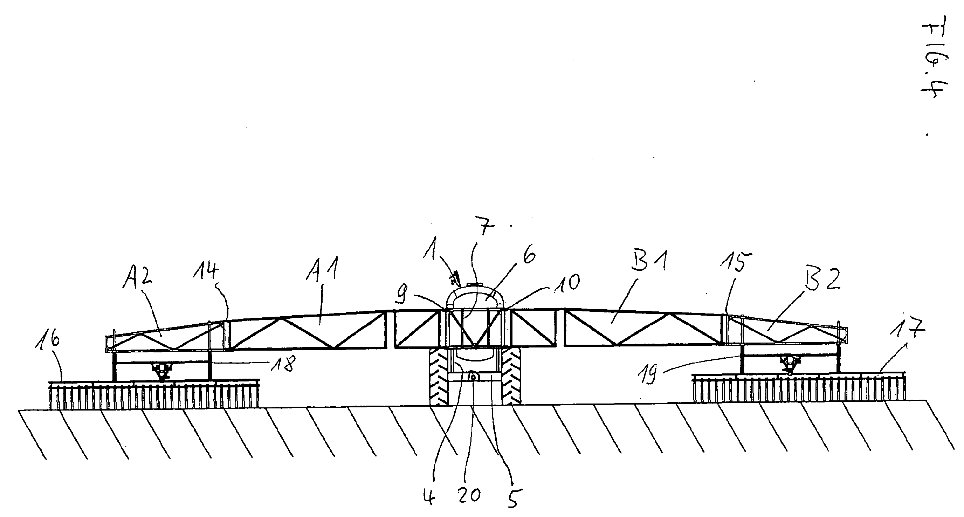

In Figur 1 ist ein Güllefahrzeug 1 in Draufsicht dargestellt, welches von einem Schlepper 2 gezogen wird. Das Güllefahrzeug 1 weist einen Güllevorratsbehälter 3 auf, der auf einem Fahrzeugrahmen 4 mit einem Fahrgestell 5 montiert ist, was später in Figur 4 noch veranschaulicht werden wird. Am Fahrzeugrahmen 4 ist an der vorderen Stirnseite 6 des Güllefahrzeugs 1 mit Hilfe eines Hauptrahmens 7 ein Gülleverteiler 8 befestigt. Der Gülleverteiler 8 besteht aus dem Hauptrahmen 7 und Auslegern A und B, die symmetrisch zur Mittellängsachse des Güllefahrzeugs 1 angeordnet und mit dem Hauptrahmen 7 über Gelenke 9, 10 verbunden sind. In der dargestellten Transportstellung liegen die Ausleger A und B zusammengefaltet an den äußeren Längsseiten des Güllefahrzeugs 1 an und werden durch Widerlager 11 und 12 am Heck 13 des Güllefahrzeugs 1 abgestützt. Über die gesamte Länge des Güllefahrzeugs 1 können zur Abstützung der Ausleger A und B beidseitig auch mehrere Widerlager vorgesehen sein, die aber hier nicht dargestellt sind.
Die beiden Ausleger A und B bestehen jeweils aus mehreren Ausleger-Abschnitten A1, A2 und B1, B2, wobei mit A1 und B1 jene Ausleger-Abschnitte bezeichnet sind, welche mittels Gelenken 9 und 10 am Hauptrahmen 7 schwenkbar gelagert sind. Mit A2 und B2 sind jene Ausleger-Abschnitte bezeichnet, die mittels weiterer Gelenke 14 und 15 an den ersten Ausleger-Abschnitten A1 und B1 schwenkbar gelagert sind. Diese - dem Hauptrahmen 7 fern liegenden - Ausleger-Abschnitte A2 und B2 tragen Gülle-Ausbringorgane wie die gezeigten Schleppschlauch-Verteiler 16 und 17. Die exakte Bauform der Gülle-Ausbringorgane ist ins Belieben des Fachmanns gestellt, es können Kippverteiler sein, die in der Transportstellung so gekippt sind, dass ihre Ausbringöffnung durch Kippen des Verteilers aus der Ausbringstellung in eine Transportstellung so weit gekippt werden, dass beim Transport keine Gülle aus den Öffnungen tropfen kann. Es können aber auch so genannte Schlauch-Biegeverteiler mit Erfolg eingesetzt werden. An den Ausbringöffnungen können Injektoren, Gleitschuhe oder Ähnliches angebracht sein.

Die Gülle-Ausbringorgane sind in ihrer Bauform als Schleppschlauch-Verteiler 16 und 17 über weitere Gelenke so an den Ausleger-Abschnitten A2 und B2 montiert, dass sie sowohl um vertikale 14, 15 als auch um horizontale Achsen 18 und 19 schwenkbar sind.

Der Hauptrahmen 7 und die beiden Ausleger A und B sowie deren Ausleger-Abschnitte A1, A2 und B1, B2 sind mit Hilfe der Platzierung und Ausgestaltung der Gelenke 9, 10; 14, 15 und 18, 19 geometrisch derart gestaltet, dass der Gülleverteiler 8 auf unterschiedlichste Art und Weise gefaltet werden kann. Zum Transport werden alle Ausleger-Abschnitte A1, A2 und B1, B2 parallel zur Längsmittelachse M des Güllefahrzeugs 1 ausgerichtet, so ergibt sich die schmalste Bauform und eine geringe Stützlast an einer Deichsel 20 des Güllefahrzeugs 1, mittels der es von einem Schlepper 2 gezogen wird. In diesem Betriebszustand sind - bei der Bauform eines Kippverteilers - die Schleppschlauch-Verteiler 16, 17 nach oben gekippt.

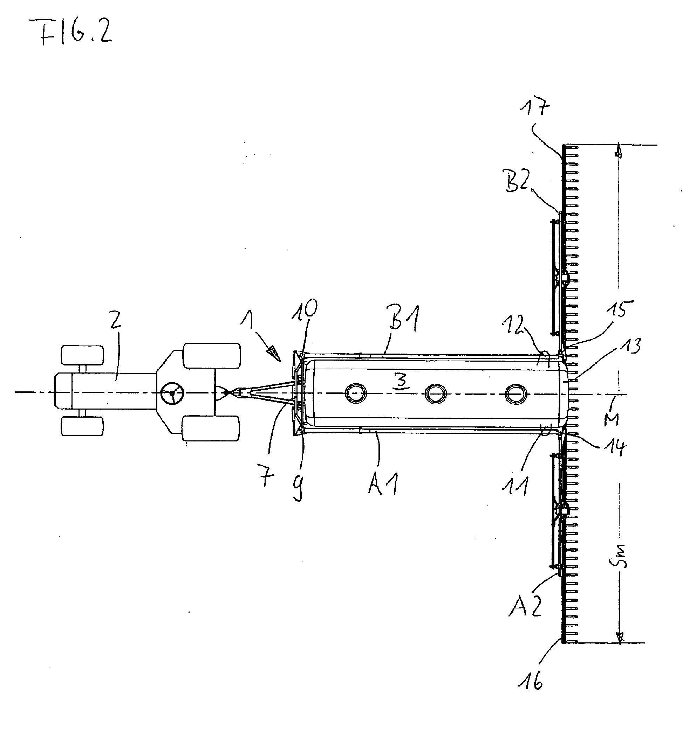

Eine weitere Betriebsart ist in Figur 2 veranschaulicht. Bei Wahl einer schmalen Arbeitsbreite, der so genannten "Schmalausbringung" sind die Ausleger-Abschnitte A1 und B1 weiterhin parallel zur Längsmittelachse des Güllefahrzeugs 1 angeordnet und werden an diesem mittels Widerlagern 11 und 12 am Heck 13 des Güllefahrzeugs 1 abgestützt. Die dem Hauptrahmen 7 fern liegenden Ausleger-Abschnitte A2 und B2 sind um einen Winkel von ca. 90° zur Längsmittelachse des Güllefahrzeugs 1 geschwenkt und die an ihnen montierten Gülle-Ausbringorgane in Form von Schleppschlauch-Verteilern 16 und 17 bilden einen symmetrisch zur Längsmittelachse des Güllefahrzeugs 1 angeordneten Gülleverteiler 8, welcher sich am Heck 13 des Güllefahrzeugs 1 befindet. Die maximal wirksame Arbeitsbreite summiert sich aufgrund der jeweiligen Breite der Schleppschlauch-Verteiler 16 und 17 zu deren doppelter Breite und erstreckt sich - beginnend an der Längsmittelachse M des Güllefahrzeugs 1 - um die jeweilige Breite der Schleppschlauch-Verteiler 16 und 17 nach außen. Da die Ausleger-Abschnitte A1, A2 und B1, B2 durch den Hauptrahmen und die Widerlager 11, 12 am Güllefahrzeug 1 abgestützt sind, werden die Ausleger A und B mit ihren Gelenken 9, 10; 14, 15 stabilisiert und unterliegen keinen besonders großen mechanischen Beanspruchungen. Im Praxisbetrieb ist diese Betriebsweise die häufigere, da fast das ganze Jahr auf Acker und Wiese im Betriebszustand "Schmalausbringung" gefahren wird. Bei gewünschter noch geringerer Arbeitsbreite kann eine Teilabschaltung der Schleppschlauch-Verteiler 16 und 17 erfolgen. Mittels nicht dargestellten Schiebern oder anderen, ebenfalls nicht dargestellten Ventilen können beliebige Bereiche der Schleppschlauch-Verteiler 16 und 17 deaktiviert und somit die wirksame Arbeitsbreite verändert werden.

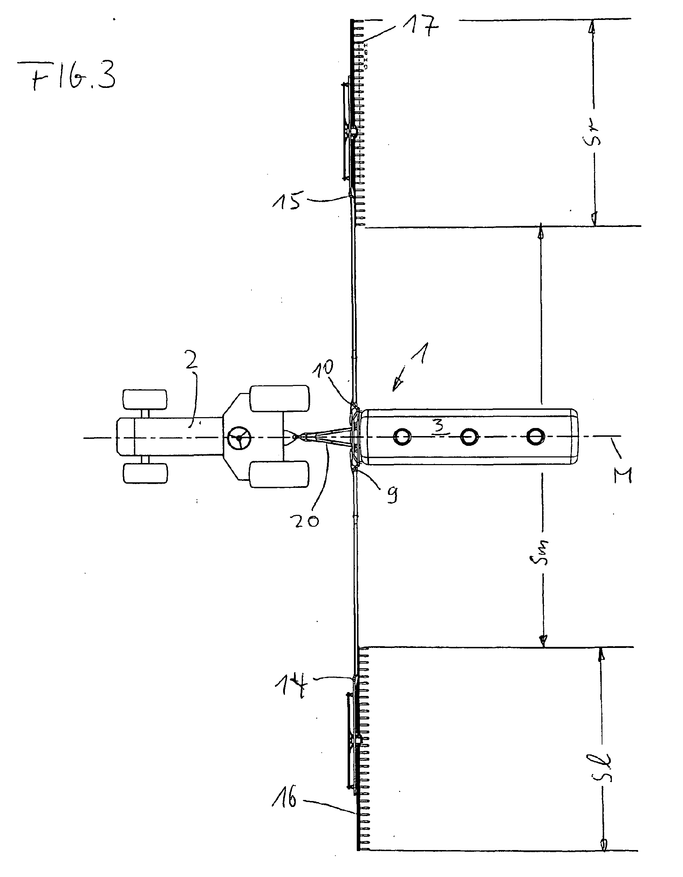

In Figur 3 ist die Betriebsart mit der größten möglichen Arbeitsbreite des Güllefahrzeugs 1 veranschaulicht. Diese Betriebsart wird als "Breitausbringung" bezeichnet und ist vor allem im so genannten stehenden Bestand erforderlich, wenn z.B. die Gülle im wachsenden Getreide ausgebracht werden soll. Aber auch bei der Gülleausbringung im so genannten "Teilbreitefahren" ist diese Betriebsart vorteilhaft. Beim "Teilbreitefahren" wird bei einem ersten Arbeitsgang auf zwei äußere Streifen S1 und Sr Gülle ausgebracht, dazu wird die Betriebsart "Breitausbringung" gewählt. In einem zweiten Durchgang wird die Betriebsart "Schmalausbringung" gemäß der Darstellung in Figur 2 gewählt und die Gülle auf dem verbleibenden mittleren Streifen Sm innerhalb der bereits gedüngten äußeren Streifen ausgebracht. Die gesamte Arbeitsbreite setzt sich in diesem Fall zusammen aus jeweils einem Viertel der Gesamtbreite auf den beiden äußeren Streifen und einer halben Arbeitsbreite zwischen den beiden äußeren Streifen. Auch in dieser Betriebsart ist eine Teilabschaltung der Schleppschlauch-Verteiler 16 und 17 möglich, so dass weitere wirksame Arbeitsbreiten generiert werden können, wie bereits in der Beschreibung zur Darstellung gemäß Figur 2 erwähnt wurde.

In Figur 4 zeigt eine Frontansicht des Gegenstands gemäß Figur 3, wie ein erfindungsgemäßes Güllefahrzeug 1 mit maximal aufgefalteten Auslegern A und B in der Betriebsart "Breitausbringung" arbeitet. Die Bezugszeichen für die einzelnen Bauelemente entsprechen den Bezeichnungen der Bauelemente in den vorstehend erläuterten Figuren. Hier sind auch der Fahrzeugrahmen 4 und das Fahrgestell 5 symbolisch aber erkennbar dargestellt.

Ein besonderer Vorteil des vorliegenden erfindungsgemäßen Gegenstands ist es, dass außer den beiden bisher veranschaulichten extremen Betriebsarten "Schmalausbringung" und "Breitausbringung" weitere Betriebsmöglichkeiten bestehen. Wenn aus bestimmten Gründen, beispielsweise aufgrund der Ackerabmessungen während der Betriebsart "Schmalausbringung" eine Teilabschaltung der Schleppschlauch-Verteiler 16 und 17 erforderlich ist, kann bei der "Breitausbringung" eine streifenweise lückenlose Verteilung der Gülle nur erfolgen, wenn die Ausleger A und B bei der "Breitausbringung" nicht in ihrer maximal aufgefalteten Stellung betrieben werden.

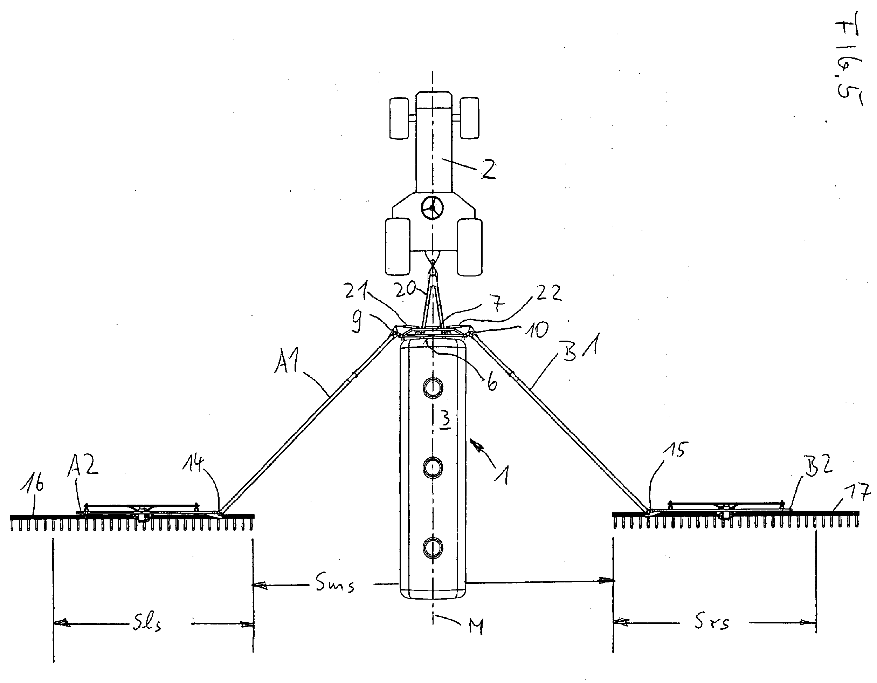

Dies ist in Figur 5 dargestellt. Durch den an der vordern Stirnseite 6 angebrachten Hauptrahmen 7 des Gülleverteilers 8 ist es möglich, die einzelnen Ausleger-Abschnitte A1, A2 und B1, B2 auch in Zwischenpositionen zu fixieren. So können die Schleppschlauch-Verteiler 16 und 17 in ihre Ausbringposition gebracht werden, in welcher sie sich in einem Winkel von ca. 90° zur Mittellängsachse des Güllefahrzeugs 1 befinden. Die gewünschte Arbeitsbreite wird durch eine einstellbare Positionierung der Ausleger-Abschnitte A1 und B1 bestimmt. Abgestützt von dem Hauptrahmen 7 an der vorderen Stirnseite 6 des Güllefahrzeugs 1 erlauben die durch Gelenke 9 und 10 mit dem Hauptrahmen 7 verbundenen ersten Ausleger-Abschnitte A1 und B1 die Einnahme einer nahezu beliebigen Winkelstellung zur Mittellängsachse M des Güllefahrzeugs 1. Die Positionierung der Ausleger-Abschnitte A1 und B1 kann durch beliebige Mittel erfolgen, vorteilhaft ist eine Positionierung mittels hydraulischer Antriebe, wie sie durch Hydraulik-Zylinder 21, 22 angedeutet ist. Die Positionierung der anderen Ausleger-Abschnitte A2 und B2 mit den Schleppschlauch-Verteilern 16 und 17 folgt sinngemäß der Winkelstellung der ersten Ausleger-Abschnitte A1 und B1, wobei deren Stellung von ca. 90° relativ zur Mittellängsachse des Güllefahrzeugs 1 stets erhalten bleibt. Es versteht sich, dass durch diese Möglichkeit der stufenlosen Positionierung der Ausleger A und B beliebige Ausbringbreiten generiert werden können, was durch die angedeuteten Streifen Sls, Sms und Srs veranschaulicht wird.

Durch geeignete Abstützungsmaßnahmen bleibt die mechanische Stabilität erhalten und die Fahrsicherheit in den unterschiedlichen Betriebsarten ist stets gegeben. Die Anordnung des Hauptrahmens 7 an der vorderen Stirnseite 6 des Güllefahrzeugs 1 bewirkt bei Auswahl der "Breitausbringung" eine gewünschte Erhöhung der Stützlast am Schlepper 2 währen der Ackerfahrten.

### Bezugszeichenliste

- 1: Güllefahrzeug
- 2: Schlepper
- 3: Güllevorratsbehälter (Gülletank)
- 4: Fahrzeugrahmen
- 5: Fahrgestell
- 6: vordere Stirnseite des Güllefahrzeugs
- 7: Hauptrahmen
- 8: Gülleverteiler
- 9: Gelenk
- 10: Gelenk
- 11: Widerlager
- 12: Widerlager
- 13: Heck des Güllefahrzeugs
- 14: Gelenk
- 15: Gelenk
- 16: Schleppschlauch-Verteiler
- 17: Schleppschlauch-Verteiler
- 18: Gelenk
- 19: Gelenk
- 20: Deichsel
- 21: Hydraulikzylinder
- 22: Hydraulikzylinder
- M: Mittellängsachse
- Sl: Streifen links
- Sr: Streifen rechts
- Sm: Streifen mittig
- Sls: Streifen links schmal
- Srs: Streifen rechts schmal
- Sms: Streifen mittig schmal

## Patentansprüche

1. Güllefahrzeug (1) mit einem Fahrzeugrahmen (4), einem Fahrgestell (5), einem Güllevorratsbehälter (3) und einem Gülleverteiler (8), welcher aus einem Hauptrahmen (7) und mehreren horizontal schwenkbaren Auslegern (A; B) besteht, welche zumindest um vertikale Achsen (9, 10; 14, 15) schwenkbar sind und Gülle-Ausbringorgane (16, 17) tragen, die vom Güllevorratsbehälter (3) mittels Leitungen mit Gülle versorgbar sind, wobei der Hauptrahmen (7) des Gülleverteilers (8) an einer in Fahrtrichtung des Güllefahrzeugs (1) vorne liegenden Stirnseite (6) des Güllefahrzeugs (1) angeordnet ist, und die schwenkbaren Ausleger (A; B) beiderseits der Mittellängsachse (M) des Güllefahrzeugs (1) angeordnet sind, wobei die schwenkbaren Ausleger mehrere Ausleger-Abschnitte (A1, A2; B1, B2) umfassen, die mit dem Hauptrahmen (7) und untereinander über Gelenke (9, 10; 14, 15) verbunden sind, **dadurch gekennzeichnet, dass** die direkt am Hauptrahmen (7) angelenkten Ausleger-Abschnitte (A1; B1) frei von Gülle-Ausbringorganen (16, 17) sind, einen beliebigen Winkel zwischen 0° und 90° zur Mittellängsachse (M) des Güllefahrzeugs (1) einnehmen können und in ihrer 0°-Position von Widerlagern (11, 12) am Heck (13) des Güllefahrzeugs (1) abgestützt sind, und dass die dem Hauptrahmen (7) fern liegenden Ausleger-Abschnitte (A2; B2) Gülle-Ausbringorgane (16, 17) tragen, wobei sich in der 0°-Position der Ausleger-Abschnitte (A1; B1) die maximal wirksame Arbeitsbreite auf die Summe der jeweiligen Breite der Gülle-Ausbringorgane (16 und 17) erstreckt, beginnend an der Mittellängsachse (M) des Güllefahrzeugs (1).

2. Güllefahrzeug nach Anspruch 1, **dadurch gekennzeichnet , dass** durch Verschwenken der direkt am Hauptrahmen (7) angelenkten Ausleger-Abschnitte (A, B1) in einem beliebigen Winkel zwischen 0° und 90° zur Mittellängsachse (M) des Güllefahrzeugs (1) die Arbeitsbreite des Gülleverteilers (8) einstellbar ist.

3. Güllefahrzeug nach den Ansprüchen 1 und 2, **dadurch gekennzeichnet, dass** darüber hinaus die Arbeitsbreite des Gülleverteilers (8) durch Teilabschaltung der Schleppschlauch-Verteiler (16, 17) einstellbar ist.

4. Güllefahrzeug nach Anspruch 1, **dadurch gekennzeichnet, dass** die dem Hauptrahmen (7) fern liegenden Ausleger-Abschnitte (A2; B2) mit ihren Gülle-Ausbringorganen (16, 17) um vertikale Achsen schwenkbar und um horizontale Achsen drehbar sind.

5. Güllefahrzeug nach Anspruch 1, **dadurch gekennzeichnet, dass** die Gülle-Ausbringorgane (16, 17) als Kippverteiler mit Schleppschläuchen ausgebildet sind.

## Claims

1. A liquid manure vehicle (1) with a vehicle frame (4), a chassis (5), a liquid manure storage tank (3) and a liquid manure distributor (8) which consists of a main frame (7) and multiple horizontally-pivotable booms (A; B), which are at least pivotable on vertical axes (9, 10; 14, 15) and which bear liquid manure distribution members (16, 17), which can be supplied with liquid manure from the liquid manure storage tank (3) by means of lines, wherein the main frame (7) of the liquid manure distributor (8) is installed on the front side (6) of the liquid manure vehicle (1) in the direction of travel of the liquid manure vehicle (1), and the pivotable booms (A; B) are arranged on both sides of the longitudinal axis (M) of the liquid manure vehicle (1), wherein the pivotable booms comprise multiple boom segments (A1, A2; B1, B2); these are connected with the main frame (7) and with each other by means of joints (9, 10; 14, 15), and are **characterised in that** the boom segments A1 and B1, which are joined directly to the main frame (7), are free from liquid manure-distribution members (16, 17), can be positioned at any angle between 0° and 90° relative to the longitudinal axis (M) of the liquid manure vehicle (1), and when in the 0° position are supported by means of abutments (11, 12) at the rear (13) of the liquid manure vehicle (1); and that the boom segments A2 and B2, which are positioned away from the main frame (7), support liquid manure-distribution members (16, 17), such that when boom segments A1 and B1 are in the 0° position, the maximum effective working width extends across the sum of the respective widths of the liquid manure-distribution members (16 and 17), starting from the longitudinal axis (M) of the liquid manure vehicle (1).

2. The liquid manure vehicle mentioned in Claim 1 is further **characterised in that** it is possible to adjust the working width of the liquid manure distributor (8) by pivoting boom segments A1 and B1 which are directly joined to the main frame (7) at any angle between 0° and 90° relative to the longitudinal axis (M) of the liquid manure vehicle (1).

3. The liquid manure vehicle mentioned in Claims 1 and 2 is further **characterised in that** the working width of the liquid manure distributor (8) can be adjusted through a partial shutdown of the drag hose spreader (16, 17).

4. The liquid manure vehicle mentioned in Claim 1, which is **characterised in that** the boom segments (A2; B2) which are positioned away from the main frame (7), together with their liquid manure distribution members (16, 17), are pivotable along the vertical axes and extendable along the horizontal axes.

5. The liquid manure vehicle mentioned in Claim 1 is further **characterised in that** the liquid manure-distribution members (16, 17) are configured as tilt spreaders with drag hoses.

## Revendications

1. Un véhicule à lisier (1) avec un châssis de véhicule (4), un châssis (5), un réservoir de stockage de lisier (3) et un distributeur de lisier (8) qui est composé d'un cadre principal (7) et de multiples rampes pivotantes horizontalement (A; B), qui peuvent au moins pivoter sur des axes verticaux (9, 10; 14, 15) et qui portent des organes de distribution de lisier (16, 17), qui peuvent être remplis de lisier depuis le réservoir de stockage de lisier (3) au moyen de lignes, dans lesquelles le châssis principal (7) du distributeur d'engrais de lisier (8) est installé sur la face avant (6) du véhicule de lisier (1) dans la direction de déplacement du véhicule à lisier (1), et les rampes pivotantes (A; B) sont disposées des deux côtés de l'axe longitudinal (M) du véhicule de lisier (1), dans lequel les rampes pivotantes comprennent plusieurs segments de bras (A1, A2; B1, B2) ; ceux-ci sont connectés avec le châssis principal (7) et entre eux au moyen de joints (9, 10; 14, 15), et sont **caractérisés en ce que** les segments de bras A1 et B1, qui sont reliés directement au châssis principal (7), sont libres des organes de distribution du lisier (16, 17), qui peut être positionné à n'importe quel angle entre 0 ° et 90 ° par rapport à l'axe longitudinal (M) du véhicule du lisier (1), et lorsqu'il est dans la Position 0°, ils sont pris en charge au moyen de butées (11, 12) à l'arrière (13) du véhicule de lisier (1) ; et que les segments du bras A2 et B2, qui sont positionnés hors du cadre principal (7), supportent les organes de distribution du lisier (16, 17) de sorte que lorsque les segments du bras A1 et B1 sont en position 0°, la largeur maximale effective de travail s'étend sur la somme des largeurs respectives des organes de distribution du fumier (16 et 17), à partir de l'axe longitudinal (M) du véhicule de lisier (1).

2. Le véhicule à lisier mentionné dans la revendication 1 est en outre **caractérisé par le fait qu'**il est possible de régler la largeur de travail du distributeur de lisier (8) en faisant pivoter les segments du bras A1 et B1, qui sont directement reliés au châssis principal (7) à n'importe quel angle entre 0° et 90° par rapport à l'axe longitudinal (M) du véhicule de lisier (1).

3. Le véhicule à lisier mentionné dans les revendications 1 et 2 est caractérisé en outre du fait que la largeur de travail du distributeur de lisier (8) peut être réglée au moyen d'un arrêt partiel de l'épandeur à pendillards (16, 17).

4. Le véhicule à lisier mentionné dans la revendication 1, qui est **caractérisé en ce que** les segments du bras (A2, B2) qui sont positionnés loin du châssis principal (7), ainsi que leurs organes de distribution du lisier (16, 17), peuvent pivoter le long des axes verticaux et s'étendre le long des axes horizontaux.

5. Le véhicule à lisier mentionné dans la revendication 1 est **caractérisé en ce que** les organes de distribution du lisier (16, 17) sont configurés comme des épandeurs inclinables avec des pendillards.
